# EUROPÄISCHE PATENTSCHRIFT

(11) **EP 2 339 683 B1**
(45) Veröffentlichungstag und Bekanntmachung des Hinweises auf die Patenterteilung: **02.05.2012**
(21) Anmeldenummer: 09015786.8
(22) Anmeldetag: 21.12.2009
(51) Int. Cl.: H01M 10/04

(54) **Akkuflachzelle und Akkublock**
Flat battery cell and battery block
Cellule plate de batterie et bloc de batterie

(43) Veröffentlichungstag der Anmeldung: 29.06.2011
(73) Patentinhaber: ads-tec GmbH, 70771 Leinfelden-Echterdingen (DE)
(72) Erfinder:
(74) Vertreter: Wasmuth, Rolf

(56) Entgegenhaltungen:
- WO-A1-01/97299
- DE-U1- 29 917 812
- US-A- 6 145 280

## Beschreibung

Die Erfindung betrifft eine Akkuflachzelle mit den Merkmalen

nach dem Oberbegriff des Anspruchs 1 sowie einen Akkublock

mit den Merkmalen nach dem Oberbegriff des Anspruchs 11.

Für die Stromversorgung von elektrischen Verbrauchern kommen verbreitet elektrische Akkumulatorblocks zur Anwendung, bei denen es für eine raum- und gewichtsparende Bauweise unter anderem auf eine hohe Energiedichte ankommt. Dies wird einerseits durch die Wahl des richtigen Zellentyps und andererseits durch eine geeignete mechanische Ausgestaltung angestrebt.

Bei derartigen Anwendungsfällen finden Akkumulatorblocks zunehmend Verwendung, die eine bestimmte Anzahl von elektrisch zusammengeschalteten Akkuflachzellen umfassen. Solche Akkuflachzellen können insbesondere Lithium-Ionen-Akkus mit einem Foliengehäuse sein, wobei eine Folie des Foliengehäuses an dessen umlaufenden Kanten zumindest teilweise mit einer Siegelnaht versiegelt ist. Das versiegelte Foliengehäuse sorgt für eine hermetische Abdichtung seines Innenraums, in dem ein empfindlicher Zellenstapel mit wechselseitig übereinander gestapeltem Anodenmaterial, Separatormaterial und Kathodenmaterial sowie mit einem Elektrolyt angeordnet ist. Die Folie des Foliengehäuses stellt die notwendige Dichtigkeit her und besteht hierzu üblicherweise aus zwei aufeinander geschweißten Folienlagen. Das Folienmaterial ist dünn, empfindlich und mechanisch schwer weiterzuverarbeiten. Insbesondere führt die Flexibilität der Folie dazu, dass dort nicht oder nur eingeschränkt Kräfte für eine Halterung der Flachzelle eingeleitet werden können.

Zur Halterung der Akkuflachzellen im Akkugehäuse oder bei der Montage wird nach dem Stand der Technik üblicherweise ein ein- oder mehrteiliger Kunststoffrahmen von außen auf die Siegelnähte des Foliengehäuses aufgesetzt. Dieser Rahmen klemmt die verschweißten Siegelnähte ein, wozu teilweise ein dauerelastisches Material vorgesehen ist. Diese Vorgehensweise erfordert neben den zusätzlichen Bauteilen auch zusätzliche kostenintensive Arbeitsschritte. Die Klemmung an den verschweißten Siegelnähten ist unpräzise, unsicher und aufwendig. Eine automatisierte Montage ist nur schwer durchzuführen. Außerdem wird die einzelne Akkuflachzelle zusammen mit dem Rahmen insgesamt erheblich größer, so dass die Energiedichte des Gesamtsystems sinkt.

Der Erfindung liegt die Aufgabe zugrunde, eine gattungsgemäße Akkuflachzelle derart weiterzubilden, dass eine vereinfachte Halterung mit geringem Platzbedarf gebildet ist.

Diese Aufgabe wird durch eine Akkuflachzelle mit den Merkmalen des Anspruchs 1 gelöst.

Der Erfindung liegt des Weiteren die Aufgabe zugrunde, einen gattungsgemäßen Akkumulatorblock derart weiterzubilden, dass eine vereinfachte Montage bei erhöhter Energiedichte möglich ist.

Diese Aufgabe wird durch einen Akkumulatorblock mit den Merkmalen des Anspruchs 11 gelöst.

Es wird eine Akkuflachzelle vorgeschlagen, bei der Haltemittel der Akkuflachzelle im Bereich der Siegelnaht zumindest teilweise von der Folie des Foliengehäuses umschlungen sind. Beim erfindungsgemäßen Akkumulatorblock mit derartigen Akkuflachzellen weist das Gehäuse Aufnahmemittel auf, in denen die Akkuflachzellen mit ihren Haltemitteln formschlüssig gehalten sind. Die naturgemäß vorhandenen Siegelnähte des Foliengehäuses üben hier in Doppelfunktion nicht nur die Schließ- und Abdichtungsfunktion des Foliengehäuses aus, sondern dienen gleichzeitig auch der Krafteinleitung und mechanischen Stabilisierung mittels der an gleicher Stelle angebrachten Haltemittel. Die Akkuflachzelle wird bei der Montage bzw. im eingebauten Zustand im Gehäuse des Akkumulatorblocks an den Haltemitteln formschlüssig gehalten, wobei die Lagerkräfte direkt in das Foliengehäuse an den entsprechenden Siegelnähten eingeleitet werden. Ohne dass zusätzlicher Platzbedarf an den in jedem Falle vorhandenen Siegelnähten erforderlich wäre, ist eine Krafteinleitung und mechanische Stabilisierung des Foliengehäuses gewährleistet, wobei der empfindliche innenliegende Zellenstapel entlastet ist. Auf den Zusatzaufwand und das zusätzliche Bauvolumen eines Halterahmens kann verzichtet werden. Die gesamte Anordnung ist kleinvolumig und weist eine hohe Energiedichte auf. Bei geeigneter Ausgestaltung der Haltemittel ist eine automatisierte Fertigung der Akkuflachzellen und auch eine Montage solcher Akkuflachzellen im Gehäuse des Akkumulatorblocks ohne weiteres möglich.

Es kann zweckmäßig sein, Haltemittel beispielsweise nur punktuell an den Ecken der quaderförmigen Akkuflachzelle vorzusehen. In bevorzugter Weiterbildung umfassen die Haltemittel zumindest zwei Haltestäbe, die sich jeweils mindestens über die Länge einer zugeordneten Kante der Akkuflachzelle erstrecken. Diese Haltestäbe können beispielsweise in Form eines Rahmens angeordnet sein. Insbesondere sind genau zwei Haltestäbe an zwei sich gegenüber und parallel zueinander liegenden Kanten angeordnet. Die Haltestäbe stabilisieren aufgrund ihrer Biegesteifigkeit die Akkuflachzelle und insbesondere die flexible Folie des Foliengehäuses, wodurch die Anordnung unempfindlich gegen äußere mechanische Beanspruchungen wird. Aufgrund ihrer Längserstreckung sind die Haltestäbe nicht nur punktuell, sondern flächig mit den Siegelnähten verbunden, wodurch örtliche Spannungsspitzen vermieden sind. Durch die parallele Anordnung zweier Haltestäbe kann eine einzelne Akkuflachzelle parallel zur Richtung der Haltestäbe in geeignete Aufnahmen des Gehäuses eingeschoben werden, wozu das Gehäuse bevorzugt Aufnahmemittel in Form von Aufnahmenuten aufweist. In einer automatisierten Fertigungsprozess lassen sich die Akkuflachzellen mit ihren parallel zueinander liegenden Kanten und den dort angeordneten Haltestäben in die Aufnahmenuten einführen, so dass der Montageprozess ohne Zusatzaufwand und ohne zusätzliches Bauvolumen leicht und in hohen Taktzahlen durchgeführt werden kann.

In bevorzugter Weiterbildung ist der Haltestab länger als die zugeordnete Kante ausgebildet und steht mit mindestens einem, bevorzugt beiden Enden über das Foliengehäuse hervor. Die hervorstehenden Enden bilden Füße, auf denen die Akkuflachzelle aufstehen kann, ohne dass das flexible Folienmaterial im Bereich der Siegelnähte aufsteht. Das flexible Foliengehäuse ist dadurch entlastet. Außerdem ist eine präzise Lagefixierung der Akkuflachzelle ohne weiteres möglich. Die Aufnahmemittel des Gehäuses weisen in diesem Zusammenhang zweckmäßig in das Gehäuse eingeformte Aufnahmeöffnungen auf, wobei die Haltestäbe mit ihren über das Foliengehäuse hervorstehenden Enden in die Aufnahmeöffnungen eingesteckt sind.

In einer zweckmäßigen Ausführungsform ist der Haltestab als Rohr ausgebildet. Bei geringem Gewicht wird ein hohes Flächenträgheitsmoment des Haltestabes erzielt, wodurch dessen Biegesteifigkeit und damit Tragfähigkeit erhöht ist. Vorteilhaft umfassen die Aufnahmemittel des Gehäuses Führungsdorne, die in den als Rohr ausgebildeten Haltestab eingreifen. Hierdurch ist eine Lagezentrierung der Haltestäbe und damit der Akkuflachzelle insgesamt mit einfachen Mitteln sichergestellt.

In vorteilhafter Weiterbildung weist der Haltestab eine augenförmige oder tropfenförmige äußere Querschnittskontur auf. Diese Querschnittskontur wird von dem Folienmaterial des Foliengehäuses umschlossen. Durch die Augen- bzw. Tropfenform mit abwechselnd konkaven und konvexen Querschnittswölbungen wird ein scharfkantiges Knicken der Folie vermieden. Insgesamt entsteht eine mechanisch hochbelastbare Verbindung zwischen dem Haltestab und dem Folienmaterial, ohne dass dieses zum Ablösen vom Haltestab neigt.

In einer bevorzugten Ausgestaltung sind die Haltemittel auf ihrer Außenseite für eine formschlüssige Verbindung mit der Folie strukturiert. Im Bereich der Strukturierung sind die Haltemittel von der Folie umschlossen, wobei sich die Folie in die Strukturierung hineinschmiegt. Hierdurch ist ein zusätzlicher Formschluss zwischen den Haltemitteln und der Folie gebildet, so dass die beispielsweise als Haltestab ausgeführten Haltemittel nicht in Längsrichtung aus der Folie herausrutschen können.

In einer vorteilhaften Ausführungsform sind an der Siegelnaht zwei Folienabschnitte der Folie aufeinanderliegend miteinander versiegelt, wobei die Siegelnaht durch zwei mit Abstand zueinander angeordnete Siegelabschnitte gebildet ist, und wobei die Haltemittel zwischen den beiden Folienabschnitten sowie zwischen den beiden Siegelabschnitten gehalten sind. Hierdurch wird erreicht, dass die Haltemittel insgesamt mit Folienmaterial umschlossen sind und dabei zwischen den beiden Siegelabschnitten liegen. Unter Vermeidung von örtlichen Spannungsspitzen tritt eine großflächige Kraftüberleitung von den Haltemitteln in das Foliengehäuse ein, wodurch die Anordnung unempfindlich gegen äußere mechanische Belastungen wird. Alternativ kann eine andere Ausgestaltung der Siegelnaht zweckmäßig sein. Hierbei ist die Folie an der Siegelnaht im Querschnitt zu einem Auge umgelegt und mittels einem Siegelschnitt versiegelt, wobei die Haltemittel in dem Auge gehalten sind.

Es kann ausreichen, die Haltemittel in vorstehend beschriebener Weise allein formschlüssig im Bereich der Siegelnähte zu befestigen. Vorteilhaft ist die Folie mit der äußeren Oberfläche der Haltemittel versiegelt, wodurch zusätzlich eine geschweißte bzw. verklebte Verbindung zwischen dem Folienmaterial und den Haltemitteln hergestellt ist, was die Tragfähigkeit der Anordnung weiter erhöht.

Es kann zweckmäßig sein, eine mechanisch tragende Verbindung ausschließlich zwischen den Haltemitteln und dem Foliengehäuse herzustellen, um den im Innenraum des Foliengehäuses angeordneten Zellenstapel mechanisch zu entlasten. Es kann aber auch vorteilhaft sein, dass die Haltemittel eine insbesondere einteilig angeformte Zellenhalterung für den innerhalb des Foliengehäuses angeordneten Zellenstapel aufweisen. Hierdurch ist eine direkte mechanische Kraftübertragung zwischen den Haltemitteln auf den Zellenstapel gegeben. Trotz des insgesamt elastisch nachgiebigen Foliengehäuses ist eine präzise Fixierung des Zellenstapels möglich. Außerdem wird das Foliengehäuse entlastet.

Bei technisch anspruchsvollen Anwendungsfällen hat sich gezeigt, dass beim Lade- und Entladevorgang eine mitunter erhebliche Wärmeentwicklung auftritt, die die Lebensdauer und Leistungsfähigkeit der einzelnen Akkuflachzellen bzw. des Akkumulatorblocks insgesamt beeinträchtigt. In bevorzugter Weiterbildung der Erfindung ist deshalb der Innenraum des Gehäuses im Betrieb des Akkumulatorblocks von einem Kühlmedium durchströmt, wobei die Akkuflachzellen zumindest teilweise vom Kühlmedium umströmt sind. Es entsteht eine wirksame innere Kühlung, die die Lebensdauer und Leistungsfähigkeit der Anordnung erhöht.

In zweckmäßiger Ausgestaltung weisen die Akkuflachzellen elektrische Kontakte auf, wobei insbesondere eine mit den elektrischen Kontakten verbundene Überwachungsplatine vorgesehen ist. Das Kühlmedium ist hierbei elektrisch isolierend ausgeführt. Die Akkuflachzellen sind vollständig einschließlich der elektrischen Kontakte und insbesondere einschließlich der Überwachungsplatine vom Kühlmedium umströmt. Diese Anordnung trägt dem Umstand Rechnung, dass nicht nur im Bereich der Zellenquader, sondern auch im Bereich der elektrischen Kontakte bzw. mit der Überwachungsplatine eine entsprechende Wärmeentwicklung zu beobachten ist. Durch die genannte Anordnung wird die in allen Bereichen frei werdende Wärmemenge zuverlässig abgeführt, ohne dass ein durch das Kühlmedium hervorgerufener elektrischer Kurzschluss zu befürchten ist.

In vorteilhafter Weiterbildung ist bezogen auf eine gewöhnliche Einbau- und Betriebslage des Akkumulatorblocks eine Umströmung der Akkuflachzellen von unten nach oben vorgesehen. Die von einer Kühlmittelpumpe hervorgerufene Durchströmung wird hierbei durch Konvektionseinflüsse unterstützt, so dass eine nur geringe Förderleistung erforderlich ist. Selbst beim Ausfall der Förderpumpe kann die sich einstellende Konvektionsströmung für einen Notlaufbetrieb des Kühlmittelkreislaufes ausreichen, wodurch die Betriebssicherheit der Anordnung gesteigert ist.

In vorteilhafter Weiterbildung sind ein Zulauf und ein Ablauf für das Kühlmedium am Gehäuse vorgesehen, wobei der Zulauf und/oder der Ablauf an der Oberseite des Gehäuses angeordnet sind. Hierdurch wird die Bildung bzw. das Festsetzen von Blasen im Gehäuse unterbunden, so dass auf separate Entlüftungseinrichtungen des Kühlmittelkreislaufes verzichtet werden kann.

Zur Erzielung einer gesteuerten Zellenumströmung ist vorteilhaft im Gehäuse ein Leitblech angeordnet, welches das Kühlmedium ausgehend vom Zulauf nach unten zu einem Boden des Gehäuses führt und dort über den Boden für eine Umströmung der Akkuflachzellen von unten nach oben verteilt. Insbesondere weist das Leitblech hierzu einen gelochten Bodenabschnitt auf, der für eine gleichmäßige Verteilung des Kühlmittels am Boden und dort ausgehend für eine gleichmäßige Umströmung sämtlicher Akkuflachzellen sorgt. Mit geringem Aufwand ist eine saubere Strömungsführung sichergestellt.

Ausführungsbeispiele der Erfindung sind nachfolgend anhand der Zeichnung näher beschrieben. Es zeigen:
- Fig. 1: in einer perspektivischen Ansicht einen erfindungs- gemäß ausgestalteten Akkumulatorblock mit Einzel- heiten seines Gehäuses;
- Fig. 2: eine perspektivische Darstellung der geöffneten Gehäusewanne des Gehäuses nach Fig. 1 mit einer ein- zelnen, in Aufnahmenuten eingeschobenen Akkuflach- zelle;
- Fig. 3: in perspektivischer Ansicht eine einzelne Akkuflach- zelle des Akkumulatorblocks nach den Fig. 1 und 2 mit Einzelheiten zur Ausgestaltung seines Folienge- häuses mit im Bereich der Siegelnähte integrierten, als Haltestab ausgebildeten Haltemitteln;
- Fig. 4: in einer Seitenansicht ein Ausführungsbeispiel des Haltestabes nach Fig. 3 mit verschiedenen außen- seitigen Strukturierungen;
- Fig. 5: eine schematische Querschnittsdarstellung der Akku- flachzelle nach Fig. 3 im Bereich einer seiner Siegelnähte mit einem darin eingeschweißten Halte- stab;
- Fig. 6: eine Variante der Anordnung nach Fig. 5 mit einer an den Haltestab angeformten Zellenhalterung;
- Fig. 7: eine weitere Variante der Anordnung nach Fig. 5 mit zu einem Auge umgelegter Folie zur Aufnahme des Haltestabes;
- Fig. 8: eine vergrößerte Detailansicht der Gehäusewanne nach Fig. 2 mit Einzelheiten zur Ausgestaltung der Aufnahmemittel für die Akkuflachzellen;
- Fig. 9: eine perspektivische Unteransicht des Zwischenbodens nach Fig. 1 mit in dessen Aufnahmeöffnungen einge- steckten Haltestäben der Akkuflachzelle;
- Fig. 10: eine Längsschnittdarstellung des Akkumulatorblocks nach Fig. 1 mit Einzelheiten zur Durchströmung der Anordnung durch ein Kühlmedium;
- Fig. 11: eine perspektivische Längsschnittdarstellung der Anordnung nach Fig. 10 mit Einzelheiten zur Aus- gestaltung eines Leitblechs für eine definierte Strömungsführung.

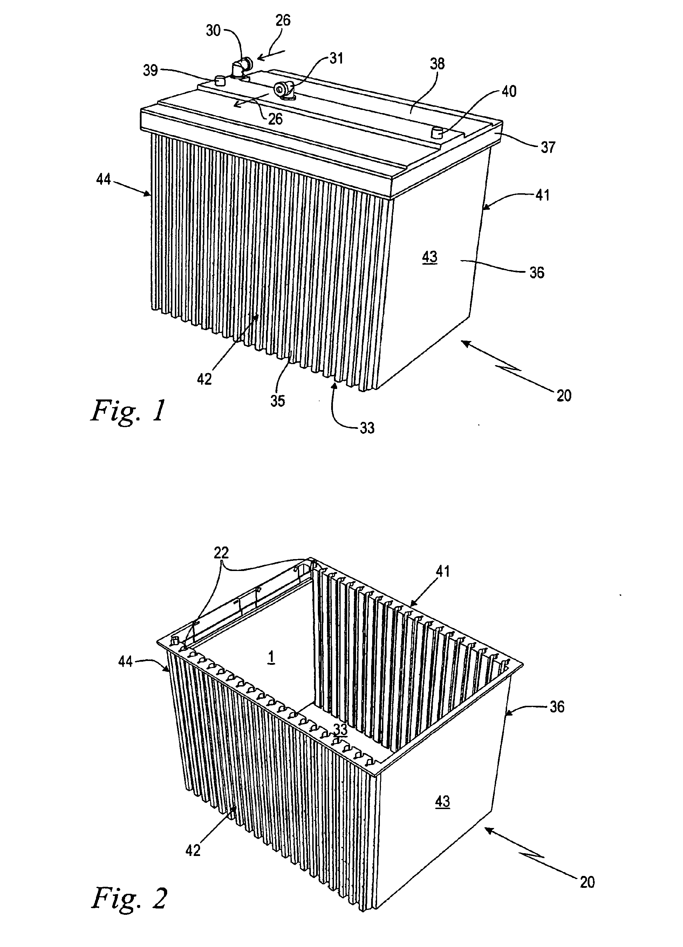

Fig. 1 zeigt in perspektivischer Ansicht einen erfindungsgemäß ausgeführten Akkumulatorblock mit einem geschlossenen Gehäuse 20. Das Gehäuse 20 ist in gewöhnlicher Einbau- und Betriebslage gezeigt und umfasst eine untere Gehäusewanne 36, auf der nach oben ein Deckel 38 mit einem zwischenliegenden Zwischenboden 37 aufgesetzt ist. Im Deckel 38 sind zwei Polklemmen 39, 40 sowie ein Zulauf 30 und ein Ablauf 31 für ein Kühlmedium 26 angeordnet. Die einteilige Gehäusewanne 36 umfasst einen Boden 33, zwei Stirnwände 43, 44 sowie zwei Seitenwände 41, 42. Die Seitenwände 41, 42 sind mit einer Kühlverrippung 35 versehen.

Fig. 2 zeigt eine perspektivische Ansicht des Gehäuses 20 nach Fig. 1 mit abgenommenem Zwischenboden 37 und Deckel 38, demnach hier nur die nach oben offene und ansonsten geschlossene Gehäusewanne 36 des Gehäuses 20 dargestellt ist. In die Seitenwände 41, 42 sind innenseitig in Vertikalrichtung parallel zueinander verlaufende Aufnahmenuten 22 eingeformt. Ein Paar von sich gegenüberliegenden Aufnahmenuten 22 hält jeweils eine einzelne Akkuflachzelle 1 derart formschlüssig in der Gehäusewanne 36, dass die Akkuflachzelle 1 parallel zu den Stirnwänden 43, 44 liegt und senkrecht zum Boden 33 steht. Der besseren Übersichtlichkeit halber ist hier nur eine einzelne Akkuflachzelle 1 gezeigt. Insgesamt sind aber zwanzig Paare von Aufnahmenuten 22 für eine ebensolche Anzahl von Akkuflachzellen 1 vorgesehen. Die einzelnen Akkuflachzellen 1 sind miteinander elektrisch in Reihe geschaltet und im gezeigten Ausführungsbeispiel als Lithium-Ionen-Akkuzellen mit einer einzelnen Zellennennspannung von 3,6 Volt ausgeführt. Hieraus ergibt sich eine Gesamtnennspannung an den Polklemmen 39, 40 (Fig. 1) von 72 Volt.

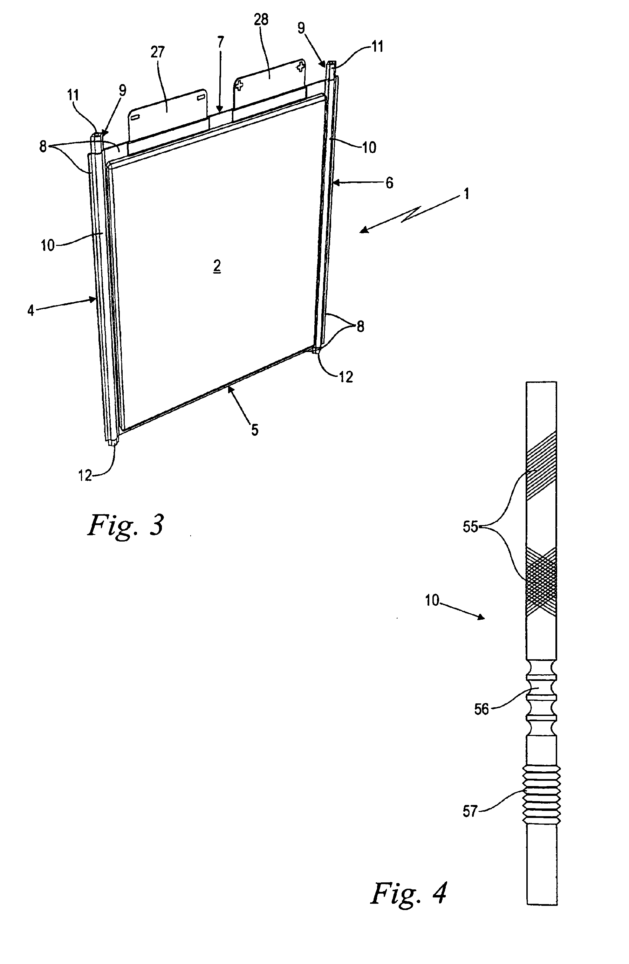

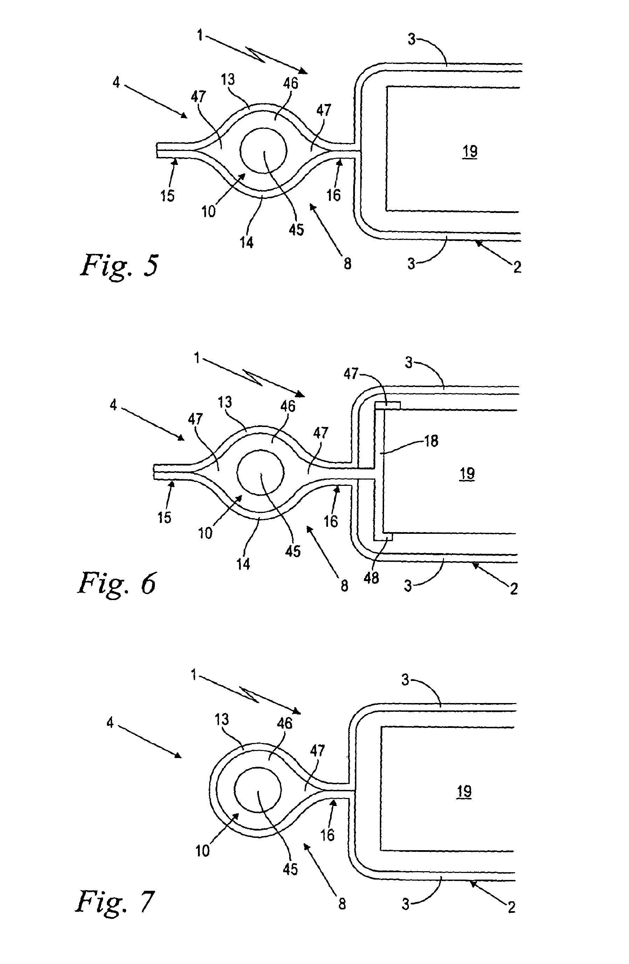

Fig. 3 zeigt eine perspektivische Ansicht einer einzelnen Akkuflachzelle 1 nach Fig. 2 mit einem im Wesentlichen rechteckigen Grundriss, der durch vier Kanten 4, 5, 6, 7 aufgespannt ist. Die Dicke der Flachzelle 1 ist wesentlich geringer als die Länge der Kanten 4, 5, 6, 7. Die Akkuflachzelle 1 umfasst ein Foliengehäuse 2 aus einer in Fig. 5 schematisch dargestellten Folie 3, wobei diese Folie 3 des Foliengehäuses 2 an den umlaufenden Kanten 4, 5, 6, 7 mit Siegelnähten 8 versiegelt ist. An der oberen Kante 7 sind durch die zugehörige Siegelnaht 8 zwei elektrische Kontakte 27, 28 hindurchgeführt.

Für die Handhabung, Montage und Halterung der Akkuflachzelle 1 im Gehäuse 20 nach den Fig. 1 und 2 sind Haltemittel 9 vorgesehen, die von der Folie 3 (Fig. 5) des Foliengehäuses 2 im Bereich eines Teils der Siegelnähte 8 umschlungen sind. Die Haltemittel 9 können Haken, Zapfen, Ösen oder dergleichen beispielsweise an den vier Ecken der Akkuflachzelle 1 sein und sind im gezeigten Ausführungsbeispiel durch zwei Haltestäbe 10 gebildet. Die beiden Haltestäbe 10 erstrecken sich parallel zueinander entlang der beiden sich gegenüberliegenden Kanten 4, 6. Die Haltestäbe 10 können kürzer als die Kanten 4, 6 sein, erstrecken sich aber bevorzugt mindestens über die gesamte Läge der zugeordneten Kanten 4, 6 und sind im gezeigten Ausführungsbeispiel länger als diese ausgebildet. Dies führt dazu, dass sich gegenüberliegende Enden 11, 12 der Haltestäbe 10 beide nach oben bzw. nach unten über das Foliengehäuse 2 hervorstehen. Es kann aber auch eine Ausführung zweckmäßig sein, bei der durch die Haltestäbe 10 ein U-förmiger oder ein geschlossener Rahmen gebildet ist.

Fig. 4 zeigt in einer Seitenansicht ein Ausführungsbeispiel des Haltestabes 10 nach Fig. 3 mit verschiedenen außenseitigen Strukturierungen, die für eine formschlüssige Verbindung des Haltestabes 10 mit der Folie 3 (Fig. 5) im Bereich der Siegelnähte 8 (Fig. 3) vorgesehen sind. Die außenseitigen Strukturierungen sind hier beispielhaft in Form von Riffelungen 55, umlaufenden Ringnuten 56 und umlaufenden Ringvorsprüngen 57 dargestellt. Natürlich können auch andere Ausgestaltungen derartiger dreidimenisonaler Strukturierungen zweckmäßig sein. Außerdem sind hier der besseren Übersichtlichkeit halber die Riffelungen 55, Ringnuten 56 und Ringvorsprünge 57 zusammen an einem gemeinsamen Haltestab 10 dargestellt, wobei es jedoch zweckmäßig sein kann, nur eine solcher oder anderer Ausgestaltungen der Strukturierung an einem Haltestab 10 vorzusehen.

Fig. 5 zeigt eine schematische und vergrößerte Querschnittsdarstellung der Akkuflachzelle 1 im Bereich ihrer Kante 4. Das Foliengehäuse 2 umschließt in seinem Innenraum einen schematisch angedeuteten Zellenquader 19. Der als Zellenstapel ausgebildete Zellenquader 19 dient als elektrochemischer Energiespeicher und ist in nicht näher dargestellter Weise durch einen vielfach sich wiederholenden Stapel von dünnem Anodenmaterial, Separatormaterial, Kathodenmaterial und eine Elektrolytfüllung gebildet. Es ist zu erkennen, dass das Foliengehäuse 2 der Akkuflachzelle 1 durch dünne Folien 3 gebildet ist, die im Bereich der Kanten 4, 5, 6, 7 (Fig. 3) unter Bildung von Siegelnähten 8 aufeinander gesiegelt sind. Die Siegelung kann durch Verklebung vorgenommen werden und ist im gezeigten Ausführungsbeispiel durch Verschweißung der Folien 3 miteinander gebildet. Die Versiegelung ist derart vorgenommen, dass die beiden aneinander angrenzenden Folien 3 mit ihren ansonsten dem inneren Zellenquader 19 zugewandten Innenseiten aufeinander liegen und dabei nach außen abstehende Siegelfahnen bilden. Im Ausführungsbeispiel nach Fig. 5 liegen hierzu ein oberer Folienabschnitt 13 und ein unterer Folienabschnitt 14 mit ihren jeweiligen Innenseiten einander zugewandt aufeinander. Die Siegelnaht ist hier durch zwei in einem in Seitenrichtung gemessenem Abstand zueinander angeordnete Siegelabschnitte 15, 16 gebildet. Der im Querschnitt gezeigte Haltestab 10 liegt zwischen den beiden Folienabschnitten 13, 14 sowie zwischen den beiden Siegelabschnitten 15, 16, so dass der Querschnitt des Haltestabes 10 vollständig vom Material der Folie 3 umschlossen ist. Hierdurch und ggf. durch die zusätzliche äußere Strukturierung nach Fig. 4 ist der Haltestab 10 formschlüssig am Foliengehäuse 2 im Bereich der Siegelnaht 8 gehalten. Es kann auch zweckmäßig sein, auf den äußeren Siegelabschnitt 15 zu verzichten, wobei dann der Haltestab 10 nur teilweise von der Folie 3 umschlungen ist, und wobei die Folienabschnitte 13, 14 an die Außenfläche des Haltestabs 10 angesiegelt sind.

Der Haltestab 10 kann einen massiven Querschnitt aufweisen und ist im gezeigten Ausführungsbeispiel als Rohr mit einem mittigen, in Längsrichtung durchgehenden Hohlraum 45 ausgeführt. Der Querschnitt des Haltestabes 10 kann kreisförmig bzw. kreisringförmig sein und weist im gezeigten Ausführungsbeispiel eine augenförmige äußere Querschnittskontur auf. Hierzu ist ein kreisringförmiger Mittenbereich 46 vorgesehen, an den sich beidseitig zu den Siegelabschnitten 15, 16 hin konkav gewölbte Übergangsbereiche 47 anschließen. Hierdurch schmiegen sich die Folienabschnitte 13, 14 ohne scharfkantige Knicke an die Außenkontur des Haltestabes 10 an, wobei sie in sanften Rundungen von der Außenkontur des Haltestabes 10 in die Siegelabschnitte 15, 16 übergehen.

Die Siegelnaht 8 an der gegenüberliegenden Kante 6 (Fig. 3) ist in analoger Weise und spiegelsymmetrisch zur Darstellung nach Fig. 4 aufgebaut. Das Gleiche gilt auch für die Siegelnähte 8 an den übrigen Kanten 5, 7 (Fig. 3), wobei hier nur ein Siegelabschnitt 16 und kein Haltestab 10 vorgesehen ist. Insgesamt ergibt sich aber ein geschlossen um sämtliche Kanten 4, 5, 6, 7 umlaufender Verlauf der Siegelnaht 8, wodurch der innere Zellenquader 19 dicht von der Folie 3 des Foliengehäuses 2 umschlossen ist.

Aus der Darstellung nach Fig. 5 ergibt sich noch, dass der Haltestab 10 formschlüssig zwischen den Folienabschnitten 13, 14 und den Siegelabschnitten 15, 16 gehalten ist. Darüber hinaus ist die Folie 3 mit der äußeren Oberfläche des Haltestabes 10 versiegelt. Diese Versiegelung kann ebenfalls durch Verklebung bzw. Verschweißung durchgeführt sein.

Fig. 6 zeigt eine Variante der Anordnung nach Fig. 5, demnach an den Haltestab 10 einteilig eine Zellenhalterung 18 angeformt ist. Die Zellenhalterung 18 ist durch den Siegelabschnitt 16 hindurch mit dem Haltestab 10 verbunden und liegt im Innenraum des Foliengehäuses 2. Die Zellenhalterung 18 umfasst einen schematisch angedeuteten Halteabsatz 48, auf den der vielschichtig aufgebaute Zellenquader 19 aufgestapelt ist. Der Zellenquader 19 ist gegenüber der Zellenhalterung 18 bzw. gegenüber dem Halteabsatz 48 noch mit einem angedeuteten Riegel 49 gesichert. Insgesamt ist hierdurch eine mechanische Anbindung des Zellenquaders 19 an den Haltestab 10 geschaffen.

Fig. 7 zeigt eine weitere Variante der Anordnung nach Fig. 5, demnach die Folie 3 des Foliengehäuses 2 an der Siegelnaht 8 im Querschnitt zu einem Auge 17 umgelegt und am Siegelabschnitt 16 versiegelt ist. Auf einen zusätzlichen Siegelabschnitt 15 (Fig. 5) kann hier verzichtet werden. In Anpassung an die Querschnittsform des Auges 17 ist hier auch der Haltestab 10 in seiner äußeren Querschnittskontur tropfenförmig ausgebildet, demnach sich an den kreisförmigen Mittenbereich 46 nur in Richtung zum Siegelabschnitt 16 hin ein einzelner Übergangsbereich 47 anschließt.

Unter gleichzeitigem Bezug auf die Fig. 3, 5, 6 und 7 kann es zweckmäßig sein, das Foliengehäuse 2 aus einem einteiligen Zuschnitt der Folie 3 zu bilden, wobei beispielsweise im Bereich der Kante 4 die Siegelnaht 8 nach Fig. 7 und die übrigen Siegelnähte 8 nach den Fig. 5 oder 6 mit bzw. ohne Haltestab 10 ausgeführt sind. Im Ausführungsbeispiel nach Fig. 7 kann ebenso wie im Ausführungsbeispiel nach Fig. 6 optional eine angeformte Zellenhalterung 18 vorgesehen sein. In den übrigen Merkmalen und Bezugszeichen stimmen die Anordnungen nach den Fig. 5 bis 7 untereinander überein.

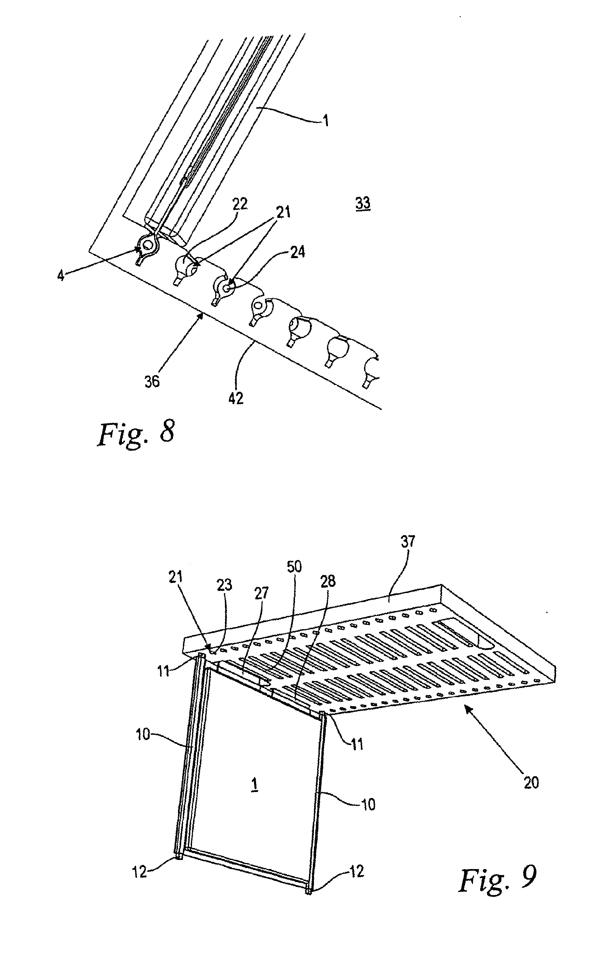

Fig. 8 zeigt eine vergrößerte perspektivische Detailansicht der Anordnung nach Fig. 2 mit Einzelheiten zu in die Gehäusewanne 36 eingeformten bzw. daran angeformten Aufnahmemitteln 21 zur formschlüssigen Befestigung der Akkuflachzellen 1. In einer ersten Ausgestaltungsform sind die Aufnahmemittel 21 durch die in die Seitenwände 41, 42 eingeformten parallel zueinander verlaufenden Aufnahmenuten 22 gebildet. Ein weiterer Teil der Aufnahmemittel 21 ist als Führungsdorn 24 ausgeführt, die im Querschnittszentrum der Aufnahmenuten 22 am Boden 33 ausgeformt sind und über den Boden 33 hervorstehen.

Der Darstellung nach Fig. 8 ist zu entnehmen, dass die Akkuflachzellen 1 mit ihren im Zusammenhang mit den Fig. 5 bis 7 näher beschriebenen Kanten 4 in die Aufnahmenuten 22 eingeführt sind. Der Querschnitt der Aufnahmenuten 21 ist an die äußere Umfangskontur der Kanten 4 einschließlich der Siegelabschnitte 15, 16 und des dort angeordneten Haltestabes 10 angepasst, so dass die Kante 4 einschließlich des dort angeordneten Haltestabes 10 in der zugehörigen Aufnahmenut 22 formschlüssig gehalten ist. Die Akkuflachzellen 1 sind dabei so weit in die Aufnahmenuten 21 eingeschoben, dass die unteren Enden 12 der Haltestäbe 10 (Fig. 3) auf dem Boden 33 aufstehen, und dass die Führungsdorne 24 in die Hohlräume 45 (Fig. 5) der als Rohr ausgeführten Haltestäbe 10 eingreifen. Die Führungsdorne 24 können achsparallel zu den Haltestäben 10 angeordnet sein. Alternativ kann eine Neigung beispielsweise schräg nach innen zum Gehäuseinnenraum zweckmäßig sein. Ein Auffädeln der Haltestäbe 10 auf die Führungsdorne 24 führt dann dazu, dass sich die Haltstäbe 10 nach außen aufspreizen, was zu einer präzisen Lagesicherung der Akkuflachzellen 1 beitragen kann. Die Aufnahmenuten 22 sind hier im Zusammenspiel mit den Führungsdornen 24 gezeigt. Es kann aber auch zweckmäßig sein, alternativ nur die Aufnahmenuten 21 oder die Führungsdorne 24 vorzusehen.

Der besseren Übersichtlichkeit halber ist in Fig. 8 nur der Bereich der einen Seitenwand 42 mit der zugeordneten Kante 4 der Akkuflachzelle 1 gezeigt. Die gegenüberliegende Seitenwand 41 (Fig. 2) mit der zugeordneten Kante 6 der Akkuflachzelle 1 (Fig. 3) ist in analoger Weise aufgebaut.

Fig. 9 zeigt eine perspektivische Unteransicht des Zwischenbodens 37 als Teil des Gehäuses 20 nach Fig. 1. Es ist zu erkennen, dass in den Zwischenboden 37 zwei Reihen von Aufnahmeöffnungen 23 eingeformt sind, die ebenfalls Teil der Aufnahmemittel 21 sind. Die Akkuflachzellen 1 sind mit ihren über das Foliengehäuse 2 hervorstehenden oberen Enden 11 in die Aufnahmeöffnungen 23 eingesteckt, wodurch hier ebenfalls eine formschlüssige Lagesicherung der Akkuflachzellen 1 gegenüber dem Gehäuse 20 hergestellt ist. Alternativ oder zusätzlich zu den Aufnahmeöffnungen 23 können auch Führungsdorne 24 nach Fig. 7 für die formschlüssige Befestigung der oberen Enden 11 vorgesehen sein. Natürlich ist es auch möglich, derartige Aufnahmeöffnungen 23 am Boden 33 des Gehäuses 20 (Fig. 8) vorzusehen, wobei dann die unteren Enden 12 (Fig. 9) in diese Aufnahmeöffnungen 23 eingesteckt werden.

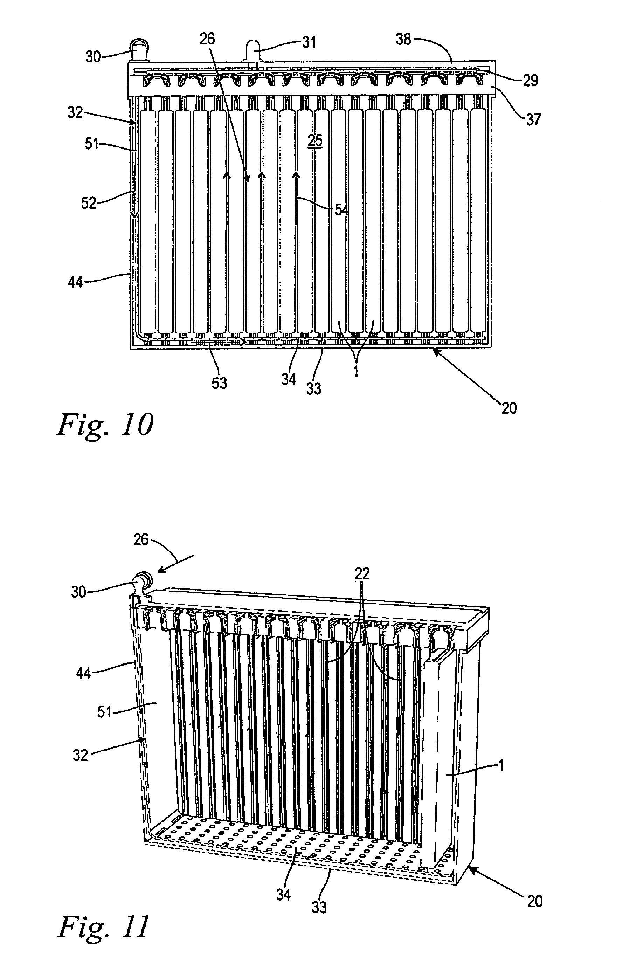

Darüber hinaus ist in Fig. 9 noch zu erkennen, dass der Zwischenboden 37 zwei Reihen von Schlitzen 50 aufweist, durch die die elektrischen Kontakte 27, 28 der Akkuflachzellen 1 hindurchgeführt sind. Entsprechend der Längschnittdarstellung nach Fig. 10 ist oberhalb des Zwischenbodens 37, aber innerhalb des Gehäuses 20 und durch den Deckel 38 abgedeckt eine Überwachungsplatine 29 angeordnet, die mit den durch den Zwischenboden 37 hindurchgeführten elektrischen Kontakten 27, 28 verbunden ist. Mittels der Überwachungsplatine 29 kann der Betriebszustand, insbesondere der Lage- bzw. Entladezustand und auch der Temperaturzustand der einzelnen Akkuflachzellen 1 überwacht werden.

Der Längsschnittdarstellung durch den erfindungsgemäßen Akkumulatorblock nach Fig. 10 sind weitere Einzelheiten zur Kühlmittelführung zu entnehmen, demnach der Innenraum 25 des Gehäuses 20 im Betrieb des Akkumulatorblocks von dem durch den Zulauf 30 zugeführten und von dem Ablauf 31 abgeführten Kühlmedium 26 (Fig. 1) durchströmt ist. Der Zulauf 30 und der Ablauf 31 sind an der Oberseite des Gehäuses 20 am Deckel 38 angeordnet, wobei der Zulauf 30 unmittelbar angrenzend an die Stirnwand 44 positioniert ist. Ein im Längsschnitt L-förmiges Leitblech 32 ist derart im Innenraum 25 des Gehäuses 20 angeordnet, dass ein Vertikalabschnitt 51 mit Abstand zur Stirnwand 44 liegt und das durch den Zulauf 30 eintretende Kühlmedium entsprechend einem Pfeil 52 von oben nach unten zum Boden 33 des Gehäuses 20 leitet. An den Vertikalabschnitt 51 schließt sich ein parallel zum Boden 33 mit Abstand dazu angeordneter Bodenabschnitt 34 an. Der Bodenabschnitt 34 sorgt für eine Verteilung des Kühlmittels 26 entlang des Bodens 33 entsprechend einem Pfeil 53. Ausgehend vom Boden 33 werden die Akkuflachzellen 1 bezogen auf die hier gezeigte gewöhnliche Einbau- und Betriebslage des Akkumulatorblocks vertikal von unten nach oben entsprechend Pfeilen 54 umströmt. Dabei werden die Akkuflachzellen 1 einschließlich ihrer elektrischen Kontakte 27, 28 (Fig. 3) und der Überwachungsplatine 29 vollständig vom Kühlmedium 26 umströmt. Der auf der Oberseite des Deckels 38 angeordnete Ablauf 31 sorgt dafür, dass sich im Innenraum 25 keine Blasen bilden können, so dass auf zusätzliche Entlüftungsmaßnahmen für das Kühlmedium 26 verzichtet werden kann.

Als Kühlmedium 26 kommen geeignete elektrisch isolierende Medien in flüssiger Form oder in Gasform in Betracht. Neben Luft können auch technische Gase wie Stickstoff oder dergleichen vorgesehen sein. Als flüssiges Kühlmedium 26 kann ein geeignetes Öl oder dergleichen vorgesehen sein.

Fig. 11 zeigt eine perspektivische Längsschnittdarstellung des erfindungsgemäßen Akkumulatorblocks mit weiteren Einzelheiten zur Ausgestaltung des Leitblechs 32. Es ist zu erkennen, dass der Vertikalabschnitt 51 durchgängig geschlossen ist und parallel mit Abstand zur Stirnwand 44 liegt. Hierdurch ist eine Zwangsleitung des Kühlmediums 26 durch den Zulauf 30 zwischen dem Vertikalabschnitt 51 und der angrenzenden Stirnwand 44 von oben nach unten entsprechend dem Pfeil 52 (Fig. 10) gebildet. Der sich daran anschließende, parallel und mit Abstand zum Boden 33 angeordnete Bodenabschnitt 34 ist gelocht ausgeführt. Hierzu sind einzelne Lochreihen vorgesehen, die zwischen den Aufnahmenuten 22 und damit zwischen den einzelnen Akkuflachzellen 1 (Fig. 10) liegen. Größe bzw. Querschnittsfläche und Anzahl der Löcher sind derart bemessen, dass einerseits eine gleichmäßige Verteilung des Kühlmediums 26 am Boden 33 stattfindet und dass andererseits sämtliche Zwischenräume zwischen den einzelnen Akkuflachzellen 1 möglichst gleichmäßig vom Kühlmedium 26 von unten nach oben durchströmt werden. Hierzu tragen auch die Aufnahmenuten 22 bei, in die die Kanten 4, 6 der Akkuflachzellen 1 (Fig. 3) entsprechend der Darstellung nach den Fig. 2 und 8 formschlüssig und im Wesentlichen strömungsdicht eingreifen. Hierdurch ist ein Strömungskurzschluss zwischen den einzelnen Akkuflachzellen 1 vermieden und eine Vertikalströmung in den Zwischenräumen zwischen den einzelnen Akkuflachzellen 1 entsprechend den Pfeilen 54 nach Fig. 10 sichergestellt.

Außerdem ergibt sich aus der Zusammenschau der Fig. 10 und 11, dass sich das vertikal von unten nach oben entsprechend der Pfeile 54 strömende Kühlmedium 26 beim Überstreichen der Akkuflachzellen 1 erwärmt, wodurch eine selbsttätige Konvektionsströmung entsteht. Zweckmäßigerweise wird zwar das Kühlmedium 26 von einer nicht dargestellten Kühlmittelpumpe in einen geschlossenen Kühlmittelkreislauf gefördert. Die vorgenannte Konvektionsströmung unterstützt jedoch die Kreislaufförderung, so dass die Antriebsleistung der vorgenannten Förderpumpe nur gering sein muss. Sofern die Förderpumpe ausfällt, kann die Konvektionsströmung dazu ausreichen, eine hinreichende Kühlung für den Notlaufbetrieb des Akkumulatorblocks sicherzustellen.

## Patentansprüche

1. Akkuflachzelle (1) mit einem Foliengehäuse (2), wobei eine Folie (3) des Foliengehäuses (2) an dessen umlaufenden Kanten (4, 5, 6, 7) zumindest teilweise an einer Siegelnaht (8) versiegelt ist,
**dadurch gekennzeichnet, dass** Haltemittel (9) der Akkuflachzelle (1) im Bereich der Siegelnaht (8) von der Folie (3) des Foliengehäuses (2) zumindest teilweise umschlungen sind.

2. Akkuflachzelle nach Anspruch 1,
**dadurch gekennzeichnet, dass** die Haltemittel (9) zumindest zwei Haltestäbe (10) umfassen, die sich jeweils mindestens über die Länge einer zugeordneten Kante (4, 5, 6, 7) erstrecken, wobei insbesondere genau zwei Haltestäbe (10) an zwei sich gegenüber und parallel zueinander liegenden Kanten (4, 6) angeordnet sind.

3. Akkuflachzelle nach Anspruch 2,
**dadurch gekennzeichnet, dass** der Haltestab (10) länger als die zugeordnete Kante (4, 6) ist und mit mindestens einem, bevorzugt beiden Enden (11, 12) über das Foliengehäuse (2) hervorsteht.

4. Akkuflachzelle nach Anspruch 2 oder 3,
**dadurch gekennzeichnet, dass** der Haltestab (10) als Rohr ausgebildet ist.

5. Akkuflachzelle nach einem der Ansprüche 2 bis 4,
**dadurch gekennzeichnet, dass** der Haltestab (10) eine augenförmige oder tropfenförmige äußere Querschnittskontur aufweist.

6. Akkuflachzelle nach einem der Ansprüche 1 bis 5,
**dadurch gekennzeichnet, dass** die Haltemittel (9) auf ihrer Außenseite für eine formschlüssige Verbindung mit der Folie (3) strukturiert sind.

7. Akkuflachzelle nach einem der Ansprüche 1 bis 6,
**dadurch gekennzeichnet, dass** an der Siegelnaht (8) zwei Folienabschnitte (13, 14) der Folie (3) aufeinanderliegend miteinander versiegelt sind, wobei die Siegelnaht (8) durch zwei mit Abstand zueinander angeordnete Siegelabschnitte (15, 16) gebildet ist, und dass die Haltemittel (9) zwischen den beiden Folienabschnitten (13, 14) sowie zwischen den beiden Siegelabschnitten (15, 16) gehalten sind.

8. Akkuflachzelle nach einem der Ansprüche 1 bis 7,
**dadurch gekennzeichnet, dass** die Folie (3) an der Siegelnaht (8) im Querschnitte zu einem Auge (17) umgelegt und mittels der Siegelnaht (8) versiegelt ist, wobei die Haltemittel (9) in dem Auge (17) gehalten sind.

9. Akkuflachzelle nach einem der Ansprüche 1 bis 8,
**dadurch gekennzeichnet, dass** die Folie (3) mit der äußeren Oberfläche der Haltemittel (9) versiegelt ist.

10. Akkuflachzelle nach einem der Ansprüche 1 bis 9,
**dadurch gekennzeichnet, dass** die Haltemittel (9) eine insbesondere einteilig angeformte Zellenhalterung (18) für einen innerhalb des Foliengehäuses (2) angeordneten Zellenquader (19) aufweisen.

11. Akkumulatorblock mit Akkuflachzellen (1) nach einem der Ansprüche 1 bis 10, umfassend ein Gehäuse (20), in dem die Akkuflachzellen (1) gehalten sind,
**dadurch gekennzeichnet, dass** das Gehäuse (20) Aufnahmemittel (21) aufweist, in denen die Akkuflachzellen (1) mit ihren Haltemitteln (9) formschlüssig gehalten sind.

12. Akkumulatorblock nach Anspruch 11,
**dadurch gekennzeichnet, dass** die Aufnahmemittel (21) parallel zueinander verlaufende Aufnahmenuten (22) umfassen, wobei die Akkuflachzellen (1) mit ihren parallel zueinander liegenden Kanten (4, 6) und den dort angeordneten Haltestäbe (10) in die Aufnahmenuten (22) eingeführt sind.

13. Akkumulatorblock nach Anspruch 11 oder 12,
**dadurch gekennzeichnet, dass** die Aufnahmemittel (21) in das Gehäuse (20) eingeformte Aufnahmeöffnungen (23) aufweisen, wobei die Akkuflachzellen (1) mit ihren über das Foliengehäuse (2) hervorstehenden Enden (11, 12) in die Aufnahmeöffnungen (23) eingesteckt sind.

14. Akkumulatorblock nach einem der Ansprüche 11 bis 13,
**dadurch gekennzeichnet, dass** die Aufnahmemittel (21) Führungsdorne (24) umfassen, die in den als Rohr ausgebildeten Haltestab (10) eingreifen.

15. Akkumulatorblock nach einem der Ansprüche 11 bis 14,
**dadurch gekennzeichnet, dass** ein Innenraum (25) des Gehäuses (20) im Betrieb des Akkumulatorblocks von einem Kühlmedium (26) durchströmt ist, wobei die Akkuflachzellen (1) zumindest teilweise vom Kühlmedium (26) umströmt sind.

16. Akkumulatorblock nach Anspruch 15,
**dadurch gekennzeichnet, dass** die Akkuflachzellen (1) elektrische Kontakte (27, 28) aufweisen, dass insbesondere eine mit den elektrischen Kontakten (27, 28) verbundene Überwachungsplatine (29) vorgesehen ist, dass das Kühlmedium (26) elektrisch isolierend ist, und dass die Akkuflachzellen (1) vollständig einschließlich der elektrischen Kontakte (27, 28) und insbesondere einschließlich der Überwachungsplatine (29) vom Kühlmedium (26) umströmt sind.

17. Akkumulatorblock nach Anspruch 15 oder 16,
**dadurch gekennzeichnet, dass** bezogen auf eine gewöhnliche Einbau- und Betriebslage des Akkumulatorblocks eine Umströmung der Akkuflachzellen (1) von unten nach oben vorgesehen ist.

18. Akkumulatorblock nach Anspruch 17,
**dadurch gekennzeichnet, dass** ein Zulauf (30) und ein Ablauf (31) für das Kühlmedium (26) vorgesehen sind, wobei der Zulauf (30) und/oder der Ablauf (31) an der Oberseite des Gehäuses (20) angeordnet ist.

19. Akkumulatorblock nach Anspruch 18,
**dadurch gekennzeichnet, dass** im Gehäuse (20) ein Leitblech (32) angeordnet ist, welches das Kühlmedium (26) ausgehend vom Zulauf (30) nach unten zu einem Boden (33) des Gehäuses (20) führt und dort über den Boden (33) für eine Umströmung der Akkuflachzellen (1) von unten nach oben verteilt.

20. Akkumulatorblock nach Anspruch 19,
**dadurch gekennzeichnet, dass** das Leitblech (32) einen gelochten Bodenabschnitt (34) aufweist.

## Claims

1. A flat battery cell (1) with a film housing (2), one film (3) of the film housing (2) being sealed at least partially at a sealing seam (8) on the circumambient edges (4, 5, 6, 7) thereof,
**characterised in that** holding means (9) of the flat battery cell (1) are at least partially wound around with the film (3) of the film housing (2) in the region of the sealing seam (8).

2. A flat battery cell according to Claim 1,
**characterised in that** the holding means (9) comprise at least two holding rods (10) which extend in each case at least over the length of an associated edge (4, 5, 6, 7), with in particular exactly two holding rods (10) being arranged on two edges (4, 6) which lie opposite and parallel to one another.

3. A flat battery cell according to Claim 2,
**characterised in that** the holding rod (10) is longer than the associated edge (4, 6) and projects with at least one, preferably both, ends (11, 12) beyond the film housing (2).

4. A flat battery cell according to Claim 2 or 3,
**characterised in that** the holding rod (10) is formed as a tube.

5. A flat battery cell according to one of Claims 2 to 4,
**characterised in that** the holding rod (10) has an eye-shaped or drop-shaped outer cross-sectional contour.

6. A flat battery cell according to one of Claims 1 to 5,
**characterised in that** the holding means (9) are structured on their outsides for a positively locking connection with the film (3).

7. A flat battery cell according to one of Claims 1 to 6,
**characterised in that** two film sections (13, 14) of the film (3) are sealed together, lying one on the other, at the sealing seam (8), the sealing seam (8) being formed by two sealing sections (15, 16) arranged spaced apart from each other, and **in that** the holding means (9) are held between the two film sections (13, 14) and between the two sealing sections (15, 16).

8. A flat battery cell according to one of Claims 1 to 7,
**characterised in that** the film (3) is laid around on the sealing seam (8) in cross-sections to form an eye (17) and is sealed by means of the sealing seam (8), the holding means (9) being held in the eye (17).

9. A flat battery cell according to one of Claims 1 to 8,
**characterised in that** the film (3) is sealed to the outer surface of the holding means (9).

10. A flat battery cell according to one of Claims 1 to 9,
**characterised in that** the holding means (9) have a cell holder (18) which is in particular formed on in one piece for a cell block (19) arranged within the film housing (2).

11. A battery block with flat battery cells (1) according to one of Claims 1 to 10, comprising a housing (20) in which the flat battery cells (1) are held,
**characterised in that** the housing (20) has receiving means (21) in which the flat battery cells (1) are held in positively-locking manner with their holding means (9).

12. A battery block according to Claim 11,
**characterised in that** the receiving means (21) comprise receiving grooves (22) extending parallel to one another, the flat battery cells (1) being introduced into the receiving grooves (22) with their edges (4, 6) which lie parallel to one another and the holding rods (10) which are arranged there.

13. A battery block according to Claim 11 or 12,
**characterised in that** the receiving means (21) have receiving openings (23) formed into the housing (20), the flat battery cells (1) being inserted into the receiving openings (23) with their ends (11, 12) which project beyond the film housing (2).

14. A battery block according to one of Claims 11 to 13,
**characterised in that** the receiving means (21) comprise guide pins (24) which engage in the holding rod (10) which is formed as a tube.

15. A battery block according to one of Claims 11 to 14,
**characterised in that** an interior (25) of the housing (20) is flowed through by a cooling medium (26) during operation of the battery block, the cooling medium (26) flowing at least partially around the flat battery cells (1).

16. A battery block according to Claim 15,
**characterised in that** the flat battery cells (1) have electrical contacts (27, 28), that in particular a monitoring board (29) which is connected to the electrical contacts (27, 28) is provided, **in that** the cooling medium (26) is electrically insulating, and **in that** the cooling medium (26) flows completely around the flat battery cells (1), including the electrical contacts (27, 28) and in particular including the monitoring board (29).

17. A battery block according to Claim 15 or 16,
**characterised in that** a flow around the flat battery cells (1) from bottom to top is provided relative to a usual installation and operating position of the battery block.

18. A battery block according to Claim 17,
**characterised in that** an inlet (30) and an outlet (31) for the cooling medium (26) are provided, the inlet (30) and/or the outlet (31) being arranged on the upper side of the housing (20).

19. A battery block according to Claim 18,
**characterised in that** a baffle plate (32) is arranged in the housing (20), which baffle plate guides the cooling medium (26) starting from the inlet (30) downwards to a base (33) of the housing (20) and there distributes it across the base (33) for flowing around the flat battery cells (1) from bottom to top.

20. A battery block according to Claim 19,
**characterised in that** the baffle plate (32) has a perforated base section (34).

## Revendications

1. Cellule plate de batterie (1) avec une enveloppe en film (2), étant précisé qu'un film (3) de ladite enveloppe (2) est scellé au moins en partie, sur ses bords périphériques (4, 5, 6, 7), au niveau d'un joint scellé (8),
**caractérisée en ce que** des moyens d'attache (9) de la cellule plate de batterie (1) sont au moins en partie enveloppés par le film (3) de l'enveloppe (2) dans la zone du joint scellé (8).

2. Cellule plate de batterie selon la revendication 1,
**caractérisée en ce que** les moyens d'attache (9) comprennent au moins deux tiges d'attache (10) qui s'étendent chacune au moins sur la longueur d'un bord associé (4, 5, 6, 7), étant précisé notamment qu'il est prévu exactement deux tiges d'attache (10) sur deux bords (4, 6) opposés et parallèles.

3. Cellule plate de batterie selon la revendication 2,
**caractérisée en ce que** la tige d'attache (10) est plus longue que le bord associé (4, 6) et dépasse avec au moins une extrémité, de préférence avec ses deux extrémités (11, 12), de l'enveloppe en film (2).

4. Cellule plate de batterie selon la revendication 2 ou 3,
**caractérisée en ce que** la tige d'attache (10) est conçue comme un tube.

5. Cellule plate de batterie selon l'une des revendications 2 à 4,
**caractérisée en ce que** la tige d'attache (10) présente un contour extérieur à section transversale en forme d'oeil ou de goutte.

6. Cellule plate de batterie selon l'une des revendications 1 à 5,
**caractérisée en ce que** les moyens d'attache (9) sont structurés sur leur côté extérieur pour une liaison par complémentarité de forme avec le film (3).

7. Cellule plate de batterie selon l'une des revendications 1 à 6,
**caractérisée en ce qu'**au niveau du joint scellé (8), deux parties (13, 14) du film (3) sont scellées ensemble, l'une sur l'autre, étant précisé que le joint scellé (8) est formé par deux parties scellées (15, 16) espacées l'une de l'autre, et **en ce que** les moyens d'attache (9) sont retenus entre les deux parties de film (13, 14) et entre les deux parties de scellage (15, 16).

8. Cellule plate de batterie selon l'une des revendications 1 à 7,
**caractérisée en ce que** le film (3) est replié au niveau du joint scellé (8) pour former en section transversale un oeil (17), et est scellé à l'aide du joint scellé (8), étant précisé que les moyens d'attache (9) sont fixés dans l'oeil (17).

9. Cellule plate de batterie selon l'une des revendications 1 à 8,
**caractérisée en ce que** le film (3) est scellé à la surface extérieure des moyens d'attache (9).

10. Cellule plate de batterie selon l'une des revendications 1 à 9,
**caractérisée en ce que** les moyens d'attache (9) présentent une fixation de cellule (18) rapportée en particulier d'une seule pièce, pour une cellule parallélipipédique (19) disposée à l'intérieur de l'enveloppe en film (2).

11. Bloc de batterie avec des cellules plates de batterie selon l'une des revendications 1 à 10, comprenant un boîtier (20) dans lequel sont fixées les cellules plates de batterie (1),
**caractérisé en ce que** le boîtier (20) présente des moyens de réception (21) dans lesquels les cellules plates de batterie (1) sont fixées par complémentarité de forme avec leurs moyens d'attache (9).

12. Bloc de batterie selon la revendication 11,
**caractérisé en ce que** les moyens de réception (21) comprennent des rainures de réception (22) parallèles, étant précisé que les cellules plates de batterie (1), avec leurs bords (4, 6) parallèles et les tiges d'attache (10) disposées au niveau de ceux-ci, sont introduites dans les rainures de réception (22).

13. Bloc de batterie selon la revendication 11 ou 12,
**caractérisé en ce que** les moyens de réception (21) présentent des ouvertures de réception (23) formées dans le boîtier (20), étant précisé que les cellules plates de batterie (1) sont insérées avec leurs extrémités (11, 12) qui dépassent de l'enveloppe en film (2) dans les ouvertures de réception (23).

14. Bloc de batterie selon l'une des revendications 11 à 13,
**caractérisé en ce que** les moyens de réception (21) comprennent des saillies de guidage (24) qui pénètrent dans la tige d'attache (10) conçue comme un tube.

15. Bloc de batterie selon l'une des revendications 11 à 14,
**caractérisé en ce qu'**un espace intérieur (25) du boîtier (20) est traversé, lors du fonctionnement du bloc de batterie, par un agent de refroidissement (26), étant précisé que les cellules plates de batterie (1) sont entourées au moins en partie par l'écoulement de l'agent de refroidissement (26).

16. Bloc de batterie selon la revendication 15,
**caractérisé en ce que** les cellules plates de batterie (1) comportent des contacts électriques (27, 28), **en ce qu'**il est prévu en particulier une platine de contrôle (29) reliée aux contacts électriques (27, 28), **en ce que** l'agent de refroidissement (26) est isolant électriquement, et **en ce que** les cellules plates de batterie (1) sont entièrement entourées par l'écoulement d'agent de refroidissement (26), y compris les contacts électriques (27, 28) et en particulier la platine de contrôle (29).

17. Bloc de batterie selon la revendication 15 ou 16,
**caractérisé en ce que** par rapport à une position de montage et de fonctionnement habituelle du bloc de batterie, il est prévu un écoulement autour des cellules plates de batterie (11) de bas en haut.

18. Bloc de batterie selon la revendication 17,
**caractérisé en ce qu'**il est prévu une amenée (30) et une sortie (31) pour l'agent de refroidissement (26), étant précisé que l'amenée (30) et/ou la sortie (31) sont disposées sur le côté supérieur de l'enveloppe (20).

19. Bloc de batterie selon la revendication 18,
**caractérisé en ce qu'**il est prévu dans le boîtier (20) une tôle de guidage (32) qui guide l'agent de refroidissement (26) à partir de l'amenée (30) vers le bas, en direction d'un fond (33) du boîtier (20) et, de là, le répartit sur le fond (33) pour un écoulement autour des cellules plates de batterie (1) de bas en haut.

20. Bloc de batterie selon la revendication 19,
**caractérisé en ce que** la tôle de guidage (32) présente une partie de fond perforée (34).
